# EUROPEAN PATENT SPECIFICATION

(11) **EP 2 208 607 B1**
(45) Date of publication and mention of the grant of the patent: **16.03.2011**
(21) Application number: 09179644.1
(22) Date of filing: 17.12.2009
(51) Int. Cl.: B29C 51/16, B29C 51/26

(54) **Vacuum forming machine and method of making vacuum formed product**
Vakuumformmaschine und Verfahren zum Herstellen eines durch Vakuum erzeugten Produkts
Machine à former sous vide et procédé de fabrication de produit formé sous vide

(30) Priority: 26.12.2008 JP 2008334437
(43) Date of publication of application: 21.07.2010
(73) Proprietor: Yamaha Hatsudoki Kabushiki Kaisha, Shizuoka-ken Shizuoka 438-8501 (JP)
(72) Inventor: Suzuki, Yasuo, Shizuoka-ken 438-8501 (JP)
(74) Representative: Schoppe, Fritz

(56) References cited:
- EP-A1- 1 145 822
- WO-A1-99/21694
- DATABASE WPI Week 200608 Thomson Scientific, London, GB; AN 2006-073304 XP002580638 -& JP 2006 007422 A (FUSE SHINKU KK) 12 January 2006 (2006-01-12)
- DATABASE WPI Week 200351 Thomson Scientific, London, GB; AN 2003-535602 XP002580639 & JP 2002 301770 A (HITACHI CABLE LTD) 15 October 2002 (2002-10-15)

## Description

### BACKGROUND OF THE INVENTION

### 1. Field of the Invention

The present invention relates to a vacuum forming machine for attaching a decorative sheet onto a base member under a reduced pressure while forming the sheet and also relates to a method of making such a vacuum formed product.

### 2. Description of the Related Art

Recently, it was proposed, as an alternative decorating technique to painting, that a decorative sheet be attached to the surface of a base member. A base member decorated with a decorative sheet can be recycled more easily than a painted one. In addition, the decorated member can have a different type of fine appearance from that of a painted one, thus contributing to improving its decorativeness, too.

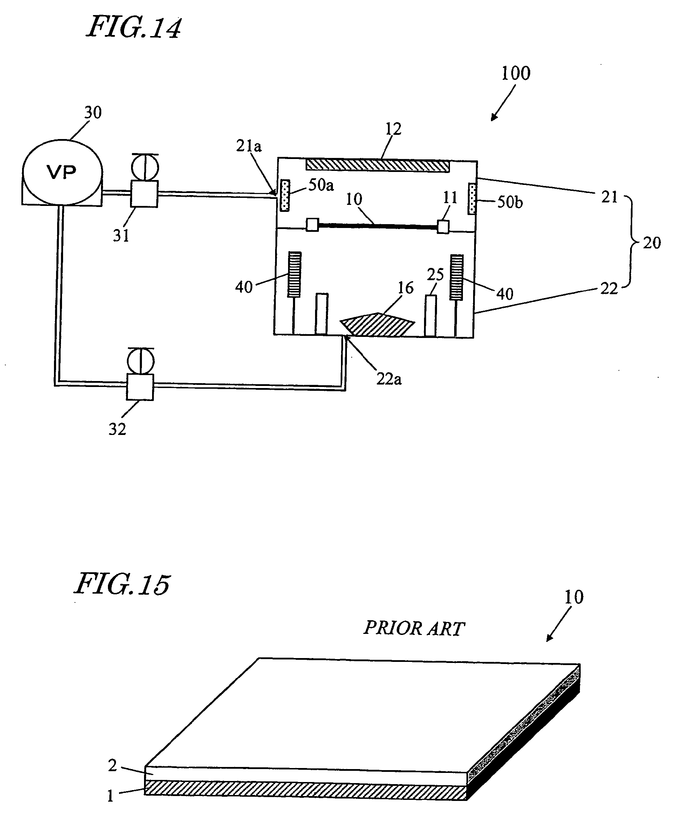

FIG. 15 illustrates an example of a decorative sheet. The decorative sheet 10 shown in FIG. 15 includes a decoration layer 1 and a supporting layer 2 that supports the decoration layer 1. Examples of the decoration layer 1 include an ink layer that has been formed by printing and a metal layer that has been formed by depositing a metallic material. The supporting layer 2 is made of a resin material such as polyvinyl chloride (PVC). When the decorative sheet 10 is attached onto the base member, an adhesive is applied onto the surface of the decorative sheet 10.

Such a decorative sheet is attached onto a base member while the decorative sheet is being formed under a reduced pressure so as to trace the surface shape of the base member. A vacuum forming machine for performing such a vacuum forming process is disclosed in JP 2006007422 and JP 63214424, for example. By using such a vacuum forming machine, a vacuum formed product, in which the decorative sheet has been attached onto the surface of the base member, can be obtained.

JP 2002 301 770 discloses an apparatus for bonding a functional film onto a TAB tape while preventing the TAB tape from becoming electrified by filling a processing chamber with clean air that has been subjected to static removal treatment.

On the other hand, JP 200 169035 discloses an apparatus for making a composite film for use in a liquid crystal display device while preventing a protective film from adhering to an unintended object under static electricity by blowing air to the protective film with a static removing blower.

Furthermore, JP 580 90925 discloses a bonded lens in which a glass lens and a polymer sheet have been stacked one upon the other, and teaches removing dust and preventing the generation of static electricity by blowing deionized air onto the inner surface of the glass substrate just before the polymer sheet is bonded onto the glass lens.

WO 2004 071739 discloses a thermoforming machine with a system to keep the ambient air constantly clean using a suction /ventilation system and ionizing bars to prevent a film to be shaped from attracting dust.

### SUMMARY OF THE INVENTION

Accordingly, the present invention provide a vacuum forming machine according to claim 1 that prevents dust, which could otherwise be gathered on the surface of a base member during a vacuum forming process using a decorative sheet, from ruining the appearance of a vacuum formed product to be obtained by that process.

A vacuum forming machine according to a preferred embodiment of the present invention is designed to attach a decorative sheet onto a base member under a reduced pressure while forming the sheet, and preferably includes a chamber configured to be loaded with the base member and the decorative sheet and including an exhaust port, an exhauster arranged to exhaust air from inside the chamber through the exhaust port, at least one static remover arranged to remove static electricity from the surface of the base member that has been loaded into the chamber, and a dust collector arranged so as to oppose the exhaust port.

In one preferred embodiment, the at least one static remover includes a plurality of static removers that are arranged to surround a region inside the chamber where the base member is located.

In this particular preferred embodiment, the static removers are arranged to produce a static-free space from which static electricity has been removed with no air blown.

In a specific preferred embodiment, the dust collector is arranged between the static-free space, produced by the static removers, and the exhaust port.

In another preferred embodiment, the vacuum forming machine further includes an elevating mechanism arranged to raise or lower the decorative sheet with respect to the base member inside the chamber. The at least one static remover is located outside of a region in which the decorative sheet and/or the base member are/is raised or lowered by the elevating mechanism. And at least a portion of the at least one static remover is located at a height between the decorative sheet and the base member that are spaced farthest apart from each other by the elevating mechanism.

In this particular preferred embodiment, the elevating mechanism includes a holder arranged to hold the decorative sheet so that the sheet is ready to be raised or lowered.

In still another preferred embodiment, the vacuum forming machine further includes an electrifier arranged to electrify the dust collector.

In a specific preferred embodiment, the dust collector has a plate or flat shape.

In yet another preferred embodiment, the vacuum forming machine further includes another dust collector that does not oppose the exhaust port.

A method of making a vacuum formed product according to claim 1 includes the steps of preparing a decorative sheet and a base member, and attaching the decorative sheet onto the base member in a chamber. The method further includes the steps of loading the base member into the chamber, exhausting air from inside the chamber in which the base member has been loaded, removing static electricity from the surface of the base member that has been loaded into the chamber, and collecting dust from inside of the chamber.

In one preferred embodiment, the step of collecting dust includes collecting dust via a dust collector that is arranged so as to oppose an exhaust port of the chamber.

In another preferred embodiment, the step of removing static electricity includes removing the static electricity via a plurality of static removers that are arranged so as to surround the base member in the chamber.

In this particular preferred embodiment, the step of removing static electricity includes forming a static-free space, from which static electricity has been removed with no air blown, produced by the static removers.

In still another preferred embodiment, the step of preparing includes preparing a decorative sheet that includes a decoration layer and a supporting layer that supports the decoration layer. The decoration layer preferably includes a metal layer.

A vacuum forming machine according to a preferred embodiment of the present invention includes a static remover, and therefore, can remove static electricity from the surface of a given base member and can prevent the surface of the base member from gathering dust.

The vacuum forming machine according to a preferred embodiment of the present invention further includes a dust collector, which is arranged so as to oppose an exhaust port. That is why when the air is exhausted from a chamber by an exhauster, the air needs to go around (or bypass) the dust collector. As a result, violent drag is produced between the dust collector and the air, thereby electrifying the dust collector. Then, the dust inside the chamber is adsorbed onto the dust collector and collected there. Consequently, the accumulation of the dust onto the surface of the base member can be prevented more reliably and completely. By using the static remover and the dust collector in this manner, the vacuum forming machine according to a preferred embodiment of the present invention can avoid the unwanted situation where the dust gathered on the surface of the base member ruins the appearance of the resultant vacuum formed product as is often the case with the prior art.

The at least one static remover of the vacuum forming machine according to a preferred embodiment of the present invention preferably includes a plurality of static removers that are arranged so as to surround a region in which the base member is put in the chamber. This is because static electricity can be removed from the surface of the base member more effectively by surrounding the region where the base member is located with those static removers.

Those static removers preferably can produce a static-free space from which static electricity has been removed with no air blown. In other words, non-blowing static removers are preferably used. By using such non-blowing static removers, static electricity can also be removed effectively even under a reduced pressure. In that case, the dust collector is preferably arranged between the static-free space produced by those static removers and the exhaust port.

The vacuum forming machine according to a preferred embodiment of the present invention preferably further includes an elevating mechanism arranged to raise or lower the decorative sheet with respect to the base member in the chamber. In that case, the static remover(s) is preferably located outside of the region in which the decorative sheet and/or the base member are/is raised or lowered by the elevating mechanism (such a region will be referred to herein as a "forming region"). By arranging the static remover(s) outside of the forming region, it is possible to prevent the static remover(s) from interfering with the forming process (e.g., to avoid an unwanted situation where the decorative sheet becomes attached to the static remover unintentionally). Also, at least a portion of the static remover(s) is preferably located at a height between the decorative sheet and the base member that are spaced farthest apart from each other by the elevating mechanism. By arranging at least a portion of static remover(s) between the decorative sheet and the base member that are farthest apart from each other, static electricity can be removed effectively.

The elevating mechanism may include a holder arranged to hold the decorative sheet so that the sheet is ready to be raised or lowered, for example. Alternatively, the elevating mechanism may include a supporting stage arranged to support the base member so that the base member is ready to be raised or lowered.

The vacuum forming machine according to a preferred embodiment of the present invention may further include an electrifier arranged to electrify the dust collector. By electrifying the dust collector via the electrifier securely, dust can be collected more perfectly.

The dust collector preferably has such a shape that it is easily electrified due to a friction with the air when the air is being exhausted by the exhauster, and may have a plate shape, for example.

The vacuum forming machine according to a preferred embodiment of the present invention may further include another dust collector that does not oppose the exhaust port. Even such a dust collector that does not oppose the exhaust port can also be electrified by the air flowing through the chamber when the pressure is reduced by the exhauster, and therefore, can also collect the dust in the chamber.

A method of making a vacuum formed product according to another preferred embodiment of the present invention includes the step of removing static electricity from the surface of a base member that has been loaded into a chamber, and therefore, can contribute to preventing the surface of the base member from gathering dust by removing static electricity from the surface of the base member. The vacuum formed product making method according to a preferred embodiment of the present invention preferably further includes the step of collecting dust from inside of the chamber, and therefore, can more securely prevent the surface of the base member from gathering dust. Thus, by including the step of removing static electricity and the step of collecting dust, the vacuum formed product making method according to a preferred embodiment of the present invention can be used to avoid an unwanted situation where the appearance of the vacuum formed product is ruined by the dust gathered on the surface of the base member.

In the step of collecting dust, the dust is preferably collected by the dust collector that is arranged so as to oppose the exhaust port of the chamber. With such an arrangement in which the dust collector is arranged so as to oppose the exhaust port, when the air is exhausted out of the chamber in the step of exhausting, the air needs to go around or bypass the dust collector. As a result, violent drag is produced between the dust collector and the air, thereby electrifying the dust collector. Then, the dust inside the chamber becomes adsorbed onto the dust collector and is collected there.

On the other hand, in the step of removing static electricity, the static electricity is preferably removed by a plurality of static removers that are arranged so as to surround the base member in the chamber. Then, static electricity can be removed effectively from the surface of the base member by surrounding the region where the base member is located with those static removers.

Furthermore, in the step of removing static electricity, a static-free space, from which static electricity has been removed with no air blown, is preferably produced by the plurality of static removers. In other words, non-blowing static removers are preferably used. By using such non-blowing static removers, static electricity can also be removed effectively even under a reduced pressure.

If the decoration layer of the decorative sheet includes a metal layer, then the dust gathered on the surface of the base member will ruin the appearance of the vacuum formed product considerably. That is why various preferred embodiments of the present invention are applicable particularly effectively to such a situation where the decoration layer of the decorative sheet includes a metal layer.

According to various preferred embodiments of the present invention, it is possible to prevent dust, which could otherwise be gathered on the surface of a base member during a vacuum forming process using a decorative sheet, from ruining of the appearance of a vacuum formed product to be obtained by that process.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 schematically illustrates a vacuum forming machine 100 according to a preferred embodiment of the present invention.

FIG. 2 is a perspective view schematically illustrating a frame for use in the vacuum forming machine 100.

FIG. 3 is a top view illustrating the inside of the chamber 20 of the vacuum forming machine 100.

FIG. 4 illustrates an exemplary combination of an electrifier and a dust collector.

FIGS. 5 through 12 illustrate respective manufacturing process steps to make a vacuum formed product using the vacuum forming machine 100.

FIG. 13 schematically illustrates a vacuum forming machine 100 according to another preferred embodiment of the present invention.

FIG. 14 schematically illustrates a vacuum forming machine 100 according to still another preferred embodiment of the present invention.

FIG. 15 illustrates an example of a decorative sheet 10.

### DETAILED DESCRIPTION OF PREFERRED EMBODIMENTS

Hereinafter, preferred embodiments of the present invention will be described with reference to the accompanying drawings. It should be noted, however, that the present invention is in no way limited to the specific preferred embodiments to be described below.

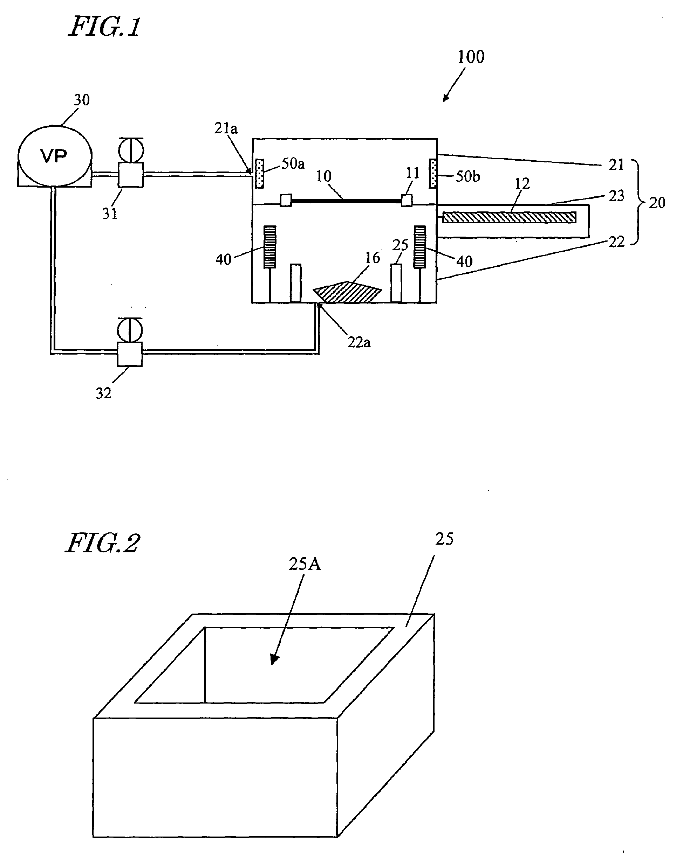

FIG. 1 illustrates a vacuum forming machine 100 according to a preferred embodiment of the present invention. In FIG. 1, a decorative sheet 10 and a base member 16 are also shown to make this description more easily understandable. The vacuum forming machine 100 is used to attach the decorative sheet 10 onto the base member 16 under a reduced pressure while forming the sheet 10. That is to say, the vacuum forming machine 100 is an apparatus for making a vacuum formed product including the base member 16 and the decorative sheet 10 (which will be simply referred to herein as a "sheet") that has been attached onto the surface of the base member 16.

As already described with reference to FIG. 15, the sheet 10 preferably includes a decoration layer 1 and a supporting layer 2 that supports the decoration layer 1. The decoration layer 1 may be either an ink layer formed by printing or a metal layer formed by depositing a metallic material, for example. The supporting layer 2 is preferably made of a resin material such as polycarbonate or polyethylene terephthalate, for example. When the sheet 10 is attached onto the base member 16, an adhesive is applied onto the surface of the sheet 10. In the following description, the supporting layer 2 that defines the body of the sheet 10 will be referred to herein as a "sheet base member". The base member 16 (which defines the body of the vacuum formed product) is preferably made of a resin material such as polypropylene (PP), nylon, an ABS resin or an AES resin, for example.

As shown in FIG. 1, the vacuum forming machine 100 of this preferred embodiment includes a chamber (i.e., a vacuum vessel) 20 that houses the base member 16 and the sheet 10 and an exhauster 30 arranged to exhaust air from inside the chamber 20.

A holder 11 to hold the sheet 10 is provided inside the chamber 20. The chamber 20 is partitioned by the sheet 10 and the holder 11 into an upper box 21 and a lower box 22. The upper box 21 has an opening at the bottom, while the lower box 22 has an opening at the top. And the base member 16 is put on the bottom of the lower box 22. The upper and lower boxes 21 and 22 include exhaust ports 21a and 22a, respectively.

The holder 11 preferably is a ring-shaped (such as a square ring) member that can hold and grip the periphery of the sheet 10 and that can be raised or lowered vertically while holding the sheet 10. That is to say, the holder 11 functions as an elevating mechanism operative to raise and lower the sheet 10 with respect to the base member 16.

The chamber 20 of this preferred embodiment preferably further includes a heater box 23 that houses a heater 12 to heat the sheet 10. The heater 12 may be a far infrared heater, for example. The heater box 23 is arranged adjacent to the lower box 22. When heating the sheet 10, the heater 12 is introduced into the lower box 22.

Inside the lower box 22 of the chamber 20, a frame 25 is arranged to surround the base member 16 housed in the chamber 20. The frame 25 preferably has a cylindrical or substantially cylindrical shape (e.g., a rectangular cylindrical shape in this preferred embodiment) as shown in FIG. 2, and the base member 16 is put into the space 25A inside the frame 25. As shown in FIG. 1, the frame 25 extends from the bottom of the lower box 22 to reach a higher level than the top of the base member 16. In other words, the top of the frame 25 is located higher than that of the base member 16. The frame 25 may be made of polypropylene (PP) with an antistatic agent, for example. Alternatively, a frame 25 made of aluminum may be grounded, for example. Still alternatively, the frame 25 could also be made of polypropylene (PP), polytetrafluoroethylene (PTFE) or polyethylene (PE), for example. The frame 25 is preferably made of a material that has higher volume resistivity than that of the base member 16 because in that case, dust can be adsorbed more easily to the frame 25 rather than the base member 16.

The exhauster 30 is preferably a vacuum pump, for example. The exhauster 30 exhausts the air from inside the chamber 20 through the exhaust ports 21a and 22a. A valve 31 arranged to adjust the degree of pressure reduction inside the upper box 21 is provided between the exhauster 30 and the upper box 21. On the other hand, another valve 32 arranged to adjust the degree of pressure reduction inside the lower box 22 is provided between the exhauster 30 and the lower box 22.

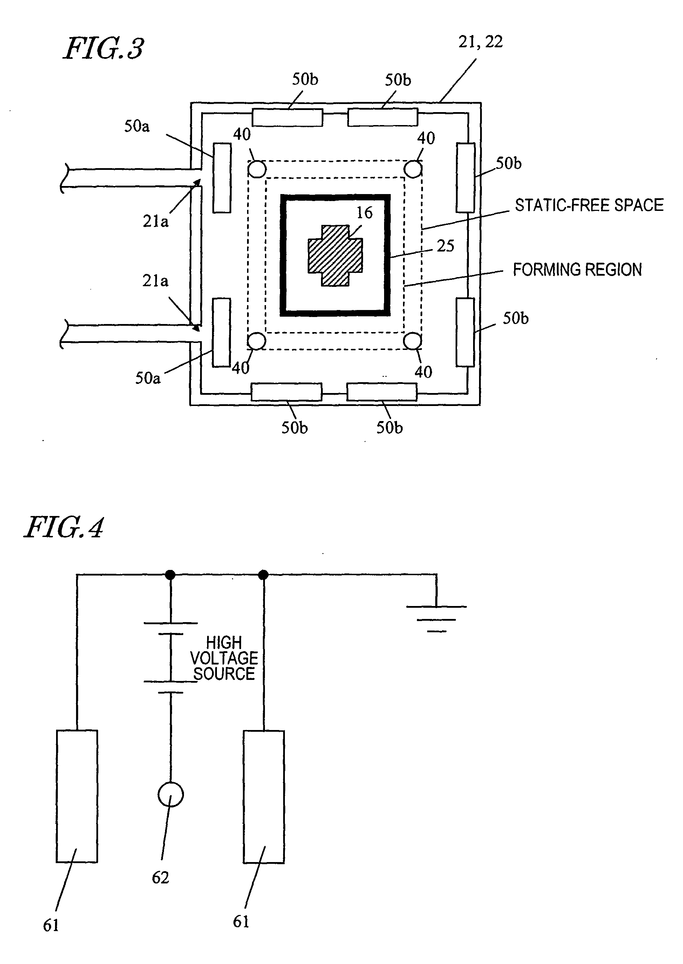

The vacuum forming machine 100 of this preferred embodiment further includes a plurality of static removers 40 and a plurality of dust collectors 50a and 50b. Hereinafter, the configuration of the vacuum forming machine 100 will be described in further detail also with reference to FIG. 3, which is a top view of the chamber 20 showing the inside of the upper and lower boxes 21 and 22 thereof. In FIG. 3, the sheet 10 and the holder 11 are not illustrated.

The static removers 40 remove static electricity from the surface of the base member 16 that has been put into the chamber 20. In this preferred embodiment, four static removers 40 are arranged so as to surround a region of the chamber 20 in which the base member 16 is arranged, for example. These static removers 40 are located outside of the region in which the sheet 10 is raised and lowered by the holder 11 that functions as an elevating mechanism (and which will be referred to herein as a "forming region"). And these static removers 40 are located at a height between the sheet 10 and the base member 16 that are spaced farthest apart from each other by the elevating mechanism (i.e., when the holder 11 is located at the uppermost level) as shown in FIG. 1.

The static removers 40 of this preferred embodiment can produce a space from which static electricity has been removed with no air blown (and which will be referred to herein as a "static-free space"). That is to say, the static removers 40 can carry out non-blowing static removal.

The dust collectors 50a and 50b preferably are members made of an electrifiable material and have a plate shape in this preferred embodiment. The material of the dust collectors 50a and 50b preferably becomes electrified as easily as possible and preferably has a volume resistivity of, for example, at least 1× 10¹⁶ Ω · cm, which is compliant with the ISO 2951 standard. Examples of specific preferred materials for the dust collectors 50a and 50b include polypropylene (PP), polytetrafluoroethylene (PTFE), polyethylene (PE) and other resin materials, for example.

One of the dust collectors 50a and 50b (e.g., the dust collector 50a in this example) is arranged so as to oppose the exhaust port 21a of the upper box 21 and is located between the static-free space produced by the static removers 40 and the exhaust port 21a. On the other hand, the other dust collector 50b does not oppose the exhaust port 21a but is mounted on the inner wall surface of (the upper box 21 of) the chamber 20. The dust collector 50a that opposes the exhaust port 21a is also located near the inner wall surface of (the upper box 21 of) the chamber 20 but is arranged at a predetermined distance (preferably about 100-200 mm, for example) from the exhaust port 21a so as not to close the exhaust port 21a.

As described above, the vacuum forming machine 100 of this preferred embodiment includes a plurality of static removers 40, and therefore, can remove static electricity from the surface of the base member 16 and can prevent the surface of the base member 16 from gathering dust. The vacuum forming machine 100 of this preferred embodiment further includes the dust collector 50a, which is arranged so as to oppose the exhaust port 21a. That is why when the air is exhausted from inside the chamber 20 by the exhauster 30, the air needs to go around or bypass the dust collector 50a. As a result, violent drag is produced between the dust collector 50a and the air, thereby electrifying the dust collector 50a. Then, the dust inside the chamber 20 is adsorbed onto the dust collector 50a and collected there. Consequently, the accumulation of the dust onto the surface of the base member 16 can be prevented more safely and reliably. By using the static removers 40 and the dust collector 50a in this manner, the vacuum forming machine 100 according to a preferred embodiment of the present invention can avoid the unwanted situation where the dust gathered on the surface of the base member 16 ruins the appearance of the resultant vacuum formed product.

The dust collector 50a preferably has a shape that will allow the collector 50a to be electrified very easily due to the drag between the air exhausted by the exhauster 30 and the collector 50a itself, and may have a plate shape, for example.

In the preferred embodiment described above, four static removers 40 are preferably arranged inside the chamber 20, for example. However, this is just an example and the number of static removers 40 provided does not have to be four. Rather, by providing at least one static remover 40, static electricity can be removed from the surface of the base member 16. Nevertheless, to more safely prevent such dust from ruining the appearance of a final vacuum formed product, it is more preferred that a plurality of static removers 40 be arranged so as to surround the region of the chamber 20 where the base member 16 is located. By surrounding the region where the base member 16 is arranged with a plurality of static removers 40, static electricity can be removed more effectively.

Also, those static removers 40 preferably can produce a static-free space from which static electricity has been removed with no air blown as in the preferred embodiment described above. In other words, non-blowing static removers 40 are preferably used, for example. By using such non-blowing static removers 40, static electricity can also be removed effectively even under a reduced pressure.

As such static removers 40 that can carry out non-blowing static removal, a static-free space ionizer TAS-801 produced by Trinc Corporation may be used, for example. That static-free space ionizer includes two electrical discharge needles that radiate positive ions and negative ions, respectively, and radiates those ions toward a space from which static electricity needs to be removed, thereby neutralizing electrical charges inside the space. As a result, static electricity can be removed without blowing any air. Naturally, a static remover that cannot carry out non-blowing static removal can also be used as the static removers 40. For example, a static removing fan, an ionizer or a static removing blower (such as a one produced by Keyence Corporation) may be used.

Also, as shown in FIG. 3, the static removers 40 are preferably located outside of the forming region. By arranging the static removers 40 outside of the forming region, it is possible to prevent the static removers 40 from interfering with the forming process (e.g., avoid an unwanted situation where the sheet 10 becomes attached to the static removers 40 unintentionally).

Furthermore, at least a portion of the static removers 40 is preferably located at a height between the sheet 10 and the base member 16 that are spaced farthest apart from each other as shown in FIG. 1. Then, the lower surface of the sheet 10 and the surface of the base member 16, on which dust gathered will cause a serious problem, can be irradiated with ions more easily, and therefore, static electricity can be removed effectively.

Also, the vacuum forming machine of this preferred embodiment includes not only the dust collector 50a that opposes the exhaust port 21a but also another dust collector 50b that does not oppose the exhaust port 21a. Even such a dust collector 50b that does not oppose the exhaust port 21a can also become electrified (to a lesser degree than the dust collector 50a that opposes the-exhaust port 21a, though) by the air flowing through the chamber 20 when the pressure is reduced by the exhauster 30, and therefore, can also collect the dust from inside the chamber 20. Thus, by providing another dust collector 50b that does not oppose the exhaust port 21a as well as the dust collector 50a that does oppose the exhaust port 21a, dust can be collected more safely and reliably. In the example illustrated in FIG. 3, preferably there are two dust collectors 50a that oppose the exhaust port 21a and six dust collectors 50b that do not oppose the exhaust port 21a, for example. However, this is just an example and the respective numbers of the dust collectors 50a and 50b are not limited to two and six.

Although the dust collectors 50a and 50b can become electrified by the flowing air being exhausted as described above, the vacuum forming machine may further include an electrifier arranged to electrify the dust collectors 50a and 50b. By intentionally electrifying the dust collectors 50a and 50b using such an electrifier, dust can be collected more perfectly. The electrifier can electrify the surface of the dust collectors 50a and 50b by applying a high voltage (for example, approximately 6,000 V to 12,000 V) to the dust collectors 50a and 50b.

FIG. 4 illustrates an exemplary combination of the electrifier and the dust collector 50a (or 50b). In the example illustrated in FIG. 4, plate electrodes 61 and a needle electrode 62 are connected to a high voltage source, thereby forming a so-called "Cottrell electrical dust collector". The plate electrodes 61 may be iron plates, for example, while the needle electrode 62 may be a fine tungsten wire, for example. In FIG. 4, the plate electrodes 61 function as the dust collector 50a (or 50b), and the other components function as the electrifier. In this dust collector, dust that has been electrified as a result of electrical discharge between the needle electrode 62 and the plate electrodes 61 is adsorbed onto the plate electrodes 61.

Next, it will be described how to make a vacuum formed product using the vacuum forming machine 100 described above. The manufacturing process of this preferred embodiment includes at least the step of preparing the sheet 10 and the base member 16 and the step of attaching the sheet 10 onto the base member 16 in the chamber 20.

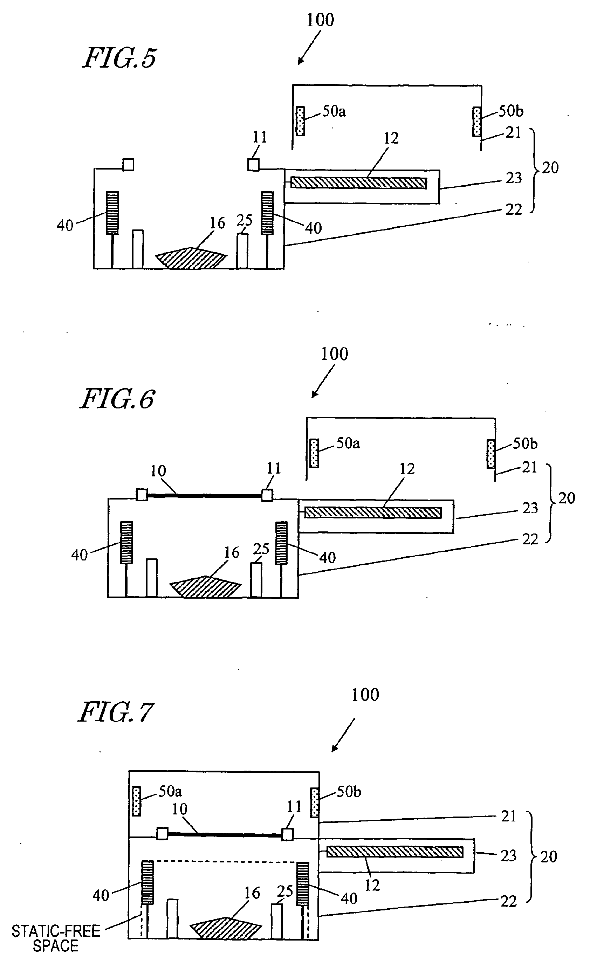

Hereinafter, the manufacturing process will be described in detail with reference to FIGS. 5 through 12, which are cross-sectional views illustrating respective process steps to make a vacuum formed product.

First of all, the sheet 10 and the base member 16 are prepared (this process step will be referred to herein as a "preparing step"). As described above, the sheet 10 includes a decoration layer 1 and a sheet base member (supporting layer) 2 that supports the decoration layer 1. The decoration layer 1 may be either an ink layer formed by printing or a metal layer formed by depositing a metallic material, for example. The decoration layer 1 does not have to be a single layer but may also have a multilayer structure in which an ink layer, a metal layer, and other layers have been stacked one upon the other, for example. The sheet base member 2 is preferably made of a resin material such as polycarbonate or polyethylene terephthalate, for example. The base member 16 is preferably made of a resin material as described above and can be made by injection molding process. As the resin material, an ABS resin or an AES resin is generally preferred but nylon is preferably used in view of its thermal resistance. Also, taking the environmental issues into consideration, an olefin-based recycled material or polyethylene is preferably used.

Next, as shown in FIG. 5, the base member 16 is loaded into the chamber 20 (this process step will be referred to herein as a "loading step"). Specifically, the base member 16 is put into the frame 25 that is arranged inside the lower box 22.

Subsequently, as shown in FIG. 6, the sheet 10 is fixed onto the holder 11. In process step, an adhesive has been applied to one of the two surfaces of the sheet 10.

Then, as shown in FIG. 7, static electricity is removed from the surface of the base member 16 that has been put into the chamber 20 (this process step will be referred to herein as a "static removing step"). Specifically, a plurality of static removers 40 that are arranged to surround the base member 16 produce a static-free space from which static electricity has been removed with no air blown (i.e., a static-free space), thereby removing static electricity.

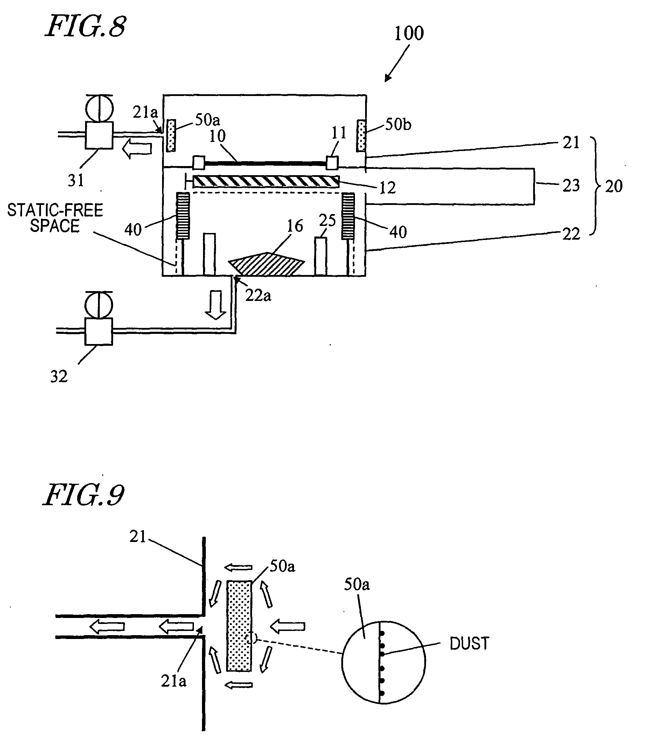

Thereafter, as shown in FIG. 8, the sheet 10 is heated with the heater 12. To soften the sheet 10 sufficiently, the sheet 10 is preferably heated to a temperature falling within the range of approximately (T_{A}-40) °C to (T_{A}+50) °C, more preferably to a temperature falling within the range of approximately (T_{A}+ 30) °C to (T_{A}+50 °C), for example, where T_{A} indicates the load deflection temperature of the sheet base member 2.

In the meantime, as also shown in FIG. 8, the air is exhausted from inside the chamber 20 through the exhaust ports 21a and 22a (this process step will be referred to herein as an "exhausting step"). In other words, the pressure inside the chamber 20 is reduced by the exhauster 30. In this process step, the air needs to go around or bypass the dust collector 50a that is arranged to oppose the exhaust port 21a as schematically shown in FIG. 9. That is why violent drag is produced between the dust collector 50a and the air, thus electrifying the dust collector 50a. As a result, the dust inside the chamber 20 is adsorbed onto the dust collector 50a and collected there. In this manner, the dust collecting step is also carried out preferably in parallel with the exhausting step.

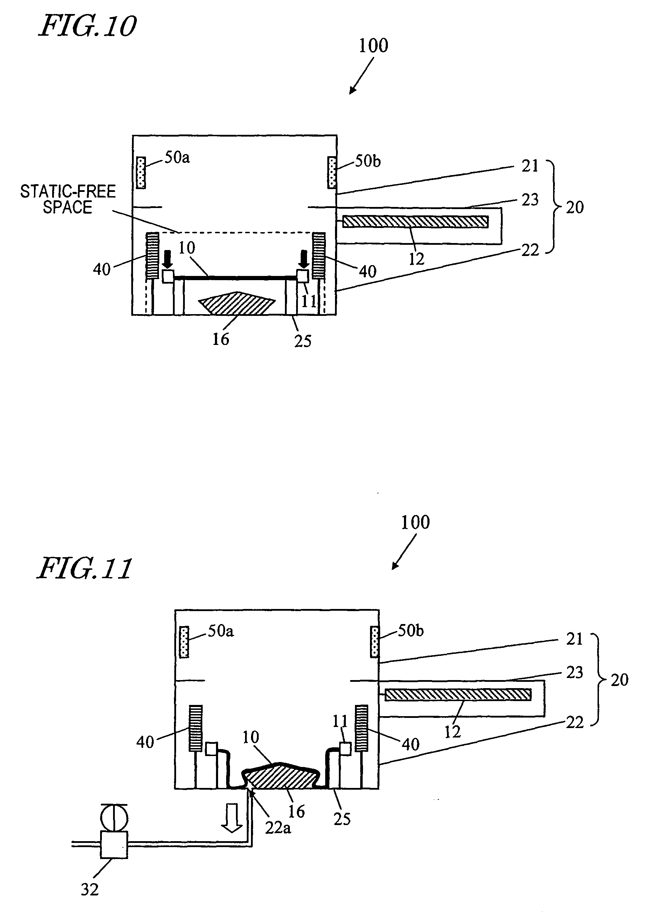

Next, as shown in FIG. 10, the holder 11, as well as the sheet 10, are lowered. Specifically, the holder 11 is lowered to the point that the sheet 10 contacts with the frame 25. In the meantime, the exhaustion through the exhaust port 21a of the upper box 21 is stopped but the exhaustion through the exhaust port 22a of the lower box 22 is still continued. As a result, due to a pressure difference created between the upper and lower boxes 21 and 22, the sheet 10 is pressed against, and bonded to, the base member 16 as shown in FIG. 11. That is to say, the sheet 10 is attached while being stretched (i.e., formed) so as to trace the surface shape of the base member 16 (this process step will be referred to herein as an "attaching step").

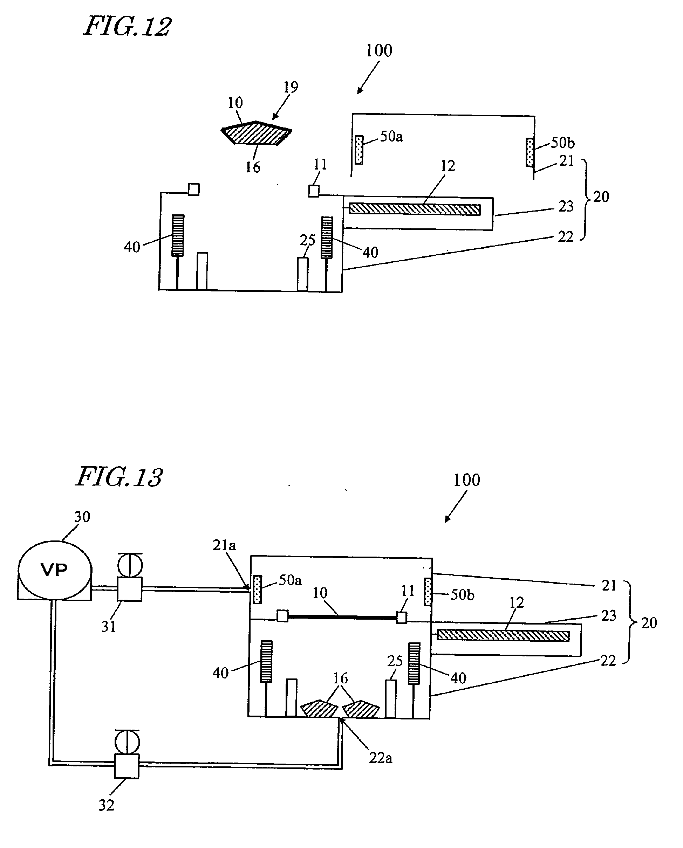

After that, excessive portions of the sheet 10 (i.e., portions that do not cover the base member 16 but extend over the member 16) are cut off (or trimmed) with a cutter such as a rotary blade, thereby completing a vacuum formed product 19 including the base member 16 and the decorative sheet 10 that has been attached onto the surface of the base member 16 as shown in FIG. 12.

The manufacturing process of this preferred embodiment includes the step of removing static electricity from the surface of the base member 16 that has been loaded into the chamber 20, and therefore prevents the surface of the base member 16 from gathering dust by removing static electricity from the surface of the base member 16. The process of this preferred embodiment further includes the step of collecting dust from inside of the chamber 20, and therefore, can more securely prevent the surface of the base member 16 from gathering dust. Thus, by including the step of removing static electricity and the step of collecting dust, the vacuum formed product making method of this preferred embodiment can be used to avoid an unwanted situation where the appearance of the vacuum formed product is ruined by the dust gathered on the surface of the base member 16.

The following Table 1 summarizes the relationship between the size (diameter) of particle of dust (and other foreign particles) caught in the gap between the base member and the sheet of a vacuum formed product and the number of such particles per square meter in a situation where the vacuum forming machine 100 of this preferred embodiment was used (identified by "specific example of this present invention") and in a situation where a conventional vacuum forming machine with no static removers or dust collectors was used (identified by "example of prior art"). The number of particles shown in Table 1 was obtained by calculating the average for 50 vacuum formed products manufactured. Also, the number of particles was counted by making a vacuum formed product with a sheet attached to a transparent base member and then observing the vacuum formed product thus obtained with the eyes from its backside.

**Table 1**

| Dust particle diameter | Number of dust particles per m² (average for 50 produces manufactured) | | | |
|---|---|---|---|---|
| | Example of prior art | Specific example of this invention | Comparative example #1 | Comparative example #2 |
| 0.1 ≦ and <0.2 | 120 | 50 | 80 | 115 |
| 0.2 ≦ and <0.4 | 30 | 10 | 20 | 30 |
| 0.4 ≦ and <1.0 | 10 | 0 | 5 | 4 |
| 1.0 ≦ | 1 | 0 | 0 | 0 |

As can be seen from Table 1, when the vacuum forming machine 100 of the specific example of a preferred embodiment of the present invention was used, the number of dust particles with a diameter of 0.2 mm or more, which is the major cause of marring the appearance, could be reduced significantly.

Table 1 also shows similar results that were obtained when a vacuum forming machine with static removers but with no dust collectors (Comparative Example #1) and a vacuum forming machine with dust collectors but with no static removers (Comparative Example #2) were used, respectively. As can be seen from Table 1, the vacuum forming machine 100 of the specific example of a preferred embodiment of the present invention could also reduce the number of dust particles significantly even compared to a vacuum forming machine of Comparative Example #1 or #2 with either static removers or dust collectors.

Using the static removers 40 and the dust collectors 50a in combination as in the vacuum forming machine 100 of this specific example, even if the same manufacturing process is repeatedly carried out a number of times, the number of dust particles hardly increases. On the other hand, if either the static removers or the dust collectors were used as in the vacuum forming machine of Comparative Example #1 or #2, the number of dust particles would increase to reach almost as many as in the prior art example as the same manufacturing process is repeatedly carried out a number of times.

Thus, according to a preferred embodiment of the present invention, the number of dust particles gathered on the surface of the base member 16 can be reduced so significantly that the appearance of the vacuum formed product 19 will not be ruined. As described above, the appearance will be ruined noticeably if the decoration layer 1 of the sheet 10 includes a metal layer. That is why preferred embodiments of the present invention are particularly effectively applicable to such a situation where the decoration layer 1 of the sheet 10 includes a metal layer.

In the step of attaching shown in FIG. 11, the space that extends over the sheet 10 (i.e., opposite to the base member 16) is preferably pressurized. In that case, the pressure difference that causes the sheet 10 to be pressed against the base member 16 can be further increased so much that the sheet 10 can be attached even more quickly. Such pressure can be applied by supplying compressed air from a compressor (not shown) into the chamber 20, for example.

In the preferred embodiments described above, the holder 11 preferably functions as an elevating mechanism (i.e., the sheet 10 is supposed to be lowered along with the holder 11). Conversely, the base member 16 and the frame 25 may be raised. In that case, a table (or a supporting stage) that supports the base member 16 and the frame 25 may be arranged inside the lower box 22 and the base member 16 and the frame 25 may be raised along with that table.

Furthermore, in FIG. 1 and other drawings, only one base member 16 preferably is supposed to be loaded into the lower box 22 (and inside the frame 25). Alternatively, a plurality of base members 16 may be loaded into the lower box 22 as shown in FIG. 13. By loading a plurality of base members 16 at a time, more vacuum formed products 19 can be obtained per attaching step, and therefore, the manufacturing cost can be reduced.

Furthermore, in the preferred embodiments described above, the chamber 20 preferably includes a heater box 23. However, the present invention is in no way limited to that specific preferred embodiment. Alternatively, the heater 12 may be arranged inside the upper box 21 and the heater box 23 may be omitted as shown in FIG. 14.

A vacuum formed product 19 made by the manufacturing process of this preferred embodiment has a fine appearance and can be used effectively as an exterior member for various types of transportation vehicles. The formed product can be used effectively as the tank housing, front fender or tail cowl of a motorcycle, for example.

According to preferred embodiments of the present invention, it is possible to prevent dust, which could otherwise be gathered on the surface of a base member during a vacuum forming process using a decorative sheet, from ruining the appearance of a vacuum formed product to be obtained by that process.

A vacuum formed product obtained with the vacuum forming machine according to various preferred embodiments of the present invention or by the method of making a vacuum formed product according to a preferred embodiment of the present invention has such a fine appearance as to be used effectively as an exterior member for various types of transportation vehicles including passenger cars, buses, trucks, motorcycles, tractors, airplanes, motorboats, and civil engineering vehicles.

## Claims

1. A vacuum forming machine (100) for attaching a decorative sheet (10) onto a base member (16), the machine comprising:
a chamber (20) configured to be loaded with the base member and the decorative sheet and including an exhaust port (21a, 22a);
an exhauster (30) arranged to exhaust air from inside the chamber through the exhaust port **characterized in that** the machine comprises:
at least one static remover (40) arranged to remove static electricity from a surface of the base (40) member that has been loaded into the chamber; and
a dust collector (50a) arranged to oppose the exhaust port.

2. The vacuum forming machine of claim 1, wherein the at least one static remover includes a plurality of static removers that are arranged to surround a region inside the chamber (20) where the base member is located.

3. The vacuum forming machine of claim 2, wherein the static removers (40) are arranged to produce a static-free space from which static electricity has been removed, and the static removers do not blow air to remove the static electricity.

4. The vacuum forming machine of claim 3, wherein the dust collector is arranged between the static-free space, produced by the static removers (40), and the exhaust port.

5. The vacuum forming machine of one of claims 1 to 4, further comprising an elevating mechanism arranged to raise or lower the decorative sheet with respect to the base member inside the chamber (20), wherein the at least one static remover (40) is located outside of a region in which the decorative sheet (10) and/or the base member (16) are/is raised or lowered by the elevating mechanism, and at least a portion of the at least one static remover is located at a height between the decorative sheet and the base member when the decorative sheet and the base member are spaced farthest apart from each other by the elevating mechanism.

6. The vacuum forming machine of claim 5, wherein the elevating mechanism includes a holder (11) arranged to hold the decorative sheet (10) so that the sheet is ready to be raised or lowered.

7. The vacuum forming machine of one of claims 1 to 6, further comprising an electrifier arranged to electrify the dust collector.

8. The vacuum forming machine of one of claims 1 to 7, wherein the dust collector (50a) has a plate shape.

9. The vacuum forming machine of one of claims 1 to 8, further comprising a second dust collector (50a) that does not oppose the exhaust port.

10. A method of making a vacuum formed product, the method comprising the steps of:
preparing a decorative sheet (10) and a base member (16);
attaching the decorative sheet onto the base member in a chamber (20);
loading the base member into the chamber;
exhausting air (21a, 22a) from inside the chamber in which the base member has been loaded **characterized in that** the method comprises the steps of:
removing static electricity (40) from a surface of the base member that has been loaded into the chamber; and
collecting dust (50a) from inside of the chamber.

11. The method of claim 10, wherein the step of collecting dust includes collecting the dust via a dust collector arranged to oppose an exhaust port (21a, 22a) of the chamber.

12. The method of claim 10 or 11, wherein the step of removing static electricity includes operating a plurality of static removers (40) to remove the static electricity, wherein the plurality of static removers are arranged so as to surround the base member in the chamber.

13. The method of claim 12, wherein the step of removing static electricity includes operating the static removers (40) to produce a static-free space from which static electricity has been removed without blowing air to remove the static electricity.

14. The method of claims 10 to 13, wherein the step of preparing includes preparing the decorative sheet including a decoration layer (1) and a supporting layer (2) arranged to support the decoration layer.

15. The method of claim 14, wherein the decoration layer (1) includes at least one metal layer.

## Patentansprüche

1. Eine Vakuumbildungsmaschine (100) zum Befestigen einer dekorativen Lage (10) auf einem Basisbauglied (16), wobei die Maschine folgende Merkmale umfasst:
eine Kammer (20), die konfiguriert ist, um mit dem Basisbauglied und der dekorativen Lage beladen zu werden, und die ein Absaugtor (21 a, 22a) umfasst;
eine Absaugvorrichtung (30), die angeordnet ist, um Luft von innerhalb der Kammer durch das Absaugtor abzusaugen, **dadurch gekennzeichnet, dass** die Maschine folgende Merkmale umfasst:
zumindest eine Statik-Entfernungsvorrichtung (40), die angeordnet ist, um statische Elektrizität von einer Oberfläche des Basisbauglieds zu entfernen, das in die Kammer geladen wurde; und
eine Staubsammelvorrichtung (50a), die angeordnet ist, um dem Absaugtor gegenüber zu liegen.

2. Die Vakuumbildungsmaschine gemäß Anspruch 1, bei der die zumindest eine Statik-Entfernungsvorrichtung eine Mehrzahl von Statik-Entfernungsvorrichtungen umfasst, die angeordnet sind, um eine Region innerhalb der Kammer (20) zu umgeben, wo das Basisbauglied angeordnet ist.

3. Die Vakuumbildungsmaschine gemäß Anspruch 2, bei der die Statik-Entfernungsvorrichtungen (40) angeordnet sind, um einen statikfreien Raum zu erzeugen, von dem statische Elektrizität entfernt wurde, und die Statik-Entfernungsvorrichtungen keine Luft blasen, um die statische Elektrizität zu entfernen.

4. Die Vakuumbildungsmaschine gemäß Anspruch 3, bei der die Staubsammelvorrichtung zwischen dem statikfreien Raum, erzeugt durch die Statik-Entfernungsvorrichtung (40), und dem Absaugtor angeordnet ist.

5. Die Vakuumbildungsmaschine gemäß einem der Ansprüche 1 bis 4, die ferner einen Anhebemechanismus umfasst, der angeordnet ist, um die dekorative Lage bezüglich des Basisbauglieds innerhalb der Kammer (20) anzuheben oder abzusenken, wobei die zumindest eine Statik-Entfernungsvorrichtung (40) außerhalb einer Region angeordnet ist, in der die dekorative Lage (10) und/oder das Basisbauglied (16) durch den Anhebemechanismus angehoben oder abgesenkt wird, und zumindest ein Teil der zumindest einen Statik-Entfernungsvorrichtung an einer Höhe zwischen der dekorativen Schicht und dem Basisbauglied angeordnet ist, wenn die dekorative Lage und das Basisbauglied durch den Hebemechanismus am weitesten voneinander beabstandet sind.

6. Die Vakuumbildungsmaschine gemäß Anspruch 5, bei der der Anhebemechanismus einen Halter (11) umfasst, der angeordnet ist, um die dekorative Lage (10) zu halten, so dass die Lage bereit ist, um angehoben oder abgesenkt zu werden.

7. Die Vakuumbildungsmaschine gemäß einem der Ansprüche 1 bis 6, die ferner eine Elektrifizierungsvorrichtung umfasst, die angeordnet ist, um die Staubsammelvorrichtung zu elektrifizieren.

8. Die Vakuumbildungsmaschine gemäß einem der Ansprüche 1 bis 7, bei der die Staubsammelvorrichtung (50a) eine Plattenform aufweist.

9. Die Vakuumbildungsmaschine gemäß einem der Ansprüche 1 bis 8, die ferner eine zweite Staubsammelvorrichtung (50a) umfasst, die nicht dem Absaugtor gegenüberliegt.

10. Ein Verfahren zum Herstellen eines vakuumgebildeten Produkts, wobei das Verfahren folgende Schritte umfasst:
Vorbereiten einer dekorativen Lage (10) und eines Basisbauglieds (16);
Befestigen der dekorativen Lage auf dem Basisbauglied in einer Kammer (20);
Laden des Basisbauglieds in die Kammer;
Absaugen von Luft (21 a, 22a) von innerhalb der Kammer, in der das Basisbauglied geladen wurde, **dadurch gekennzeichnet, dass** das Verfahren folgende Schritte umfasst:
Entfernen statischer Elektrizität (40) von einer Oberfläche des Basisbauglieds, das in die Kammer geladen wurde; und
Sammeln von Staub (50a) von innerhalb der Kammer.

11. Das Verfahren gemäß Anspruch 10, bei dem der Schritt des Sammelns von Staub das Sammeln des Staubs über eine Staubsammelvorrichtung umfasst, die angeordnet ist, um einem Absaugtor (21 a, 22a) der Kammer gegenüber zu liegen.

12. Das Verfahren gemäß Anspruch 10 oder 11, bei dem der Schritt des Entfernens statischer Elektrizität das Betreiben einer Mehrzahl von Statik-Entfernungsvorrichtungen (40) umfasst, um die statische Elektrizität zu entfernen, wobei die Mehrzahl von Statik-Entfernungsvorrichtungen angeordnet sind, um das Basisbauglied in der Kammer zu umgeben.

13. Das Verfahren gemäß Anspruch 12, bei dem der Schritt des Entfernens statischer Elektrizität das Betreiben der Statik-Entfernungsvorrichtung (40) umfasst, um einen statikfreien Raum zu erzeugen, von dem statische Elektrizität entfernt wurde, ohne Luft zu blasen, um die statische Elektrizität zu entfernen.

14. Das Verfahren gemäß einem der Ansprüche 10 bis 13, bei dem der Schritt des Vorbereitens das Vorbereiten der dekorativen Lage umfasst, die eine Dekorationsschicht (1) und eine Trageschicht (2) umfasst, die angeordnet ist, um die Dekorationsschicht zu tragen.

15. Das Verfahren gemäß Anspruch 14, bei dem die Dekorationsschicht (1) zumindest eine Metallschicht umfasst.

## Revendications

1. Machine à former sous vide (100) destinée à fixer une feuille décorative (10) sur un élément de base (16), la machine comprenant:
une chambre (20) configurée pour être chargée de l'élément de base et de la feuille décorative et comportant un orifice d'extraction (21a, 22a);
un extracteur (30) disposé de manière à extraire de l'air de l'intérieur de la chambre à travers l'orifice d'extraction,
**caractérisée par le fait que** la machine comprend:
au moins un éliminateur statique (40) destiné à éliminer l'électricité statique d'une surface de l'élément de base qui a été chargé dans la chambre; et
un collecteur de poussières (50a) disposé de manière opposée à l'orifice d'extraction.

2. Machine à former sous vide selon la revendication 1, dans laquelle l'au moins un éliminateur statique comporte une pluralité d'éliminateurs statiques qui sont disposés de manière à entourer une région à l'intérieur de la chambre (20) dans laquelle se situe l'élément de base.

3. Machine à former sous vide selon la revendication 2, dans laquelle les éliminateurs statiques (40) sont disposés de manière à produire un espace antistatique duquel a été éliminée l'électricité statique, et les éliminateurs statiques ne soufflent pas d'air pour éliminer l'électricité statique.

4. Machine à former sous vide selon la revendication 3, dans lequel le collecteur de poussière est disposé entre l'espace antistatique, produit par les éliminateurs statiques (40), et l'orifice d'extraction.

5. Machine à former sous vide selon l'une des revendications 1 à 4, comprenant par ailleurs un mécanisme d'élévation disposé de manière à élever ou abaisser la feuille décorative par rapport à l'élément de base à l'intérieur de la chambre (20), dans laquelle au moins un éliminateur statique (40) est situé à l'extérieur d'une région dans laquelle la feuille décorative (10) et/ou l'élément de base (16) est élevé ou abaissé par le mécanisme d'élévation, et au moins une partie de l'au moins un éliminateur statique est situé à une hauteur entre la feuille décorative et l'élément de base lorsque la feuille décorative et l'élément de base sont espacés le plus l'un de l'autre par le mécanisme d'élévation.

6. Machine à former sous vide selon la revendication 5, dans laquelle le mécanisme d'élévation comporte un support (11) destiné à maintenir la feuille décorative (10) de sorte que la feuille soit prête à être élevée ou abaissée

7. Machine à former sous vide selon la revendication 1 à 6, comprenant par ailleurs un électrificateur disposé de manière à électrifier le collecteur de poussière.

8. Machine à former sous vide selon la revendication 1 à 7, dans lequel le collecteur de poussière (50a) présente une forme de plaque.

9. Machine à former sous vide selon la revendication 1 à 8, comprenant par ailleurs un deuxième collecteur de poussière (50a) qui n'est pas opposé à l'orifice d'extraction.

10. Procédé pour fabriquer un produit formé sous vide, le procédé comprenant les étapes consistant à:
préparer une feuille décorative (10) et un élément de base (16);
fixer la feuille décorative à l'élément de base dans une chambre (20);
charger l'élément de base dans la chambre;
extraire l'air (21a, 22a) de l'intérieur de la chambre dans laquelle a été chargé l'élément de base;
**caractérisé par le fait que** le procédé comprend les étapes consistant à
éliminer l'électricité statique (40) d'une surface de l'élément de base qui a été chargé dans la chambre; et
collecter la poussière (50a) de l'intérieur de la chambre.

11. Procédé selon la revendication 10, dans lequel l'étape consistant à collecter la poussière comporte le fait de collecter la poussière via un collecteur de poussière disposé de manière opposée à un orifice d'extraction (21a,22a) de la chambre.

12. Procédé selon la revendication 10 ou 11, dans lequel l'étape consistant à éliminer l'électricité statique comporte le fait de faire fonctionner une pluralité d'éliminateurs statiques (40), pour éliminer l'électricité statique, dans lequel la pluralité d'éliminateurs statiques sont disposés de manière à entourer l'élément de base dans la chambre.

13. Procédé selon la revendication 12, dans lequel l'étape consistant à éliminer l'électricité statique comporte le fait de faire fonctionner les éliminateurs statiques (40), pour produire un espace antistatique duquel l'électricité statique a été éliminée sans souffler de l'air pour éliminer l'électricité statique.

14. Procédé selon les revendications 10 à 13, dans lequel l'étape consistant à préparer comporte le fait de préparer la feuille décorative comportant une couche de décor (1) et une couche de support (2) disposée de manière à supporter la couche de décor.

15. Procédé selon la revendication 14, dans laquelle la couche de décor (1) comporte au moins une couche métallique.
